# EUROPÄISCHE PATENTSCHRIFT

(11) **EP 3 491 072 B1**
(45) Veröffentlichungstag und Bekanntmachung des Hinweises auf die Patenterteilung: **11.12.2019**
(21) Anmeldenummer: 17707825.0
(22) Anmeldetag: 27.02.2017
(51) Int. Cl.: C09C 1/30, C04B 24/42, C04B 26/32, C04B 30/00, C04B 30/02

(54) **VERFAHREN ZUR HERSTELLUNG HYDROPHOBER SILICA FORMKÖRPER**
METHOD FOR PRODUCING HYDROPHOBIC SILICA MOULDED BODIES
PROCÉDÉ DE FABRICATION DE CORPS FAÇONNÉS EN SILICE HYDROPHOBE

(43) Veröffentlichungstag der Anmeldung: 05.06.2019
(73) Patentinhaber: Wacker Chemie AG, 81737 München (DE)
(72) Erfinder: HINDELANG, Konrad, 80939 München (DE); WEIDNER, Richard, 84489 Burghausen (DE); JANTKE, Dominik, 85386 Eching (DE)
(74) Vertreter: Fritz, Helmut
(86) Internationale Anmeldenummer: PCT/EP2017/054474
(87) Internationale Veröffentlichungsnummer: WO 2018/153495

(56) Entgegenhaltungen:
- EP-A1- 2 781 558
- DE-A1-102009 054 566

## Beschreibung

Die Erfindung betrifft ein Verfahren zur Herstellung hydrophober Silica Formkörper bei niedriger Temperatur.

Die Wärmedämmung zur Einsparung von Energie hat im Rahmen des Bewusstwerdens für nachhaltige Entwicklung und der Verteuerung der Energie sowie sich verknappenden fossilen Rohstoffen einen hohen Stellenwert erhalten. Diese Anforderungen an eine Optimierung des Wärmedämmschutzes gelten im gleichen Maße sowohl für Gebäude, also für Neubauten oder Bauten im Bestand, als auch für thermische Isolierungen im logistischen oder stationären Bereich.

Vor dem Hintergrund einer nachhaltigen Isolierung, welche eine geringe Wärmeleitung sowie geringe Brennbarkeit aufweist, sind anorganische, poröse Materialien zunehmend im Fokus.

Organische Dämmstoffe (z.B. Polystyrol) kommen aufgrund ihrer Brennbarkeit und einer zum Teil nicht geklärten Entsorgung zunehmen unter Druck. Es ist daher wünschenswert Dämmstoffe mit möglichst geringer Brennbarkeit herzustellen.

Poröse, anorganische Stoffe wie pyrogene oder gefällte Kieselsäuren zeigen gute Isoliereigenschaften und sind zudem nicht brennbar.

Pyrogene Kieselsäuren werden durch Flammenhydrolyse von flüchtigen Siliciumverbindungen, wie z.B. organischen und anorganischen Chlorsilanen, in einer Wasserstoff- und Sauerstoffflamme hergestellt. Die so hergestellten Kieselsäuren weisen eine poröse Struktur auf und sind hydrophil.

Gefällte Kieselsäuren werden durch einen Fällungsprozess aus Wasserglas hergestellt. Als Wasserglas werden aus einer Schmelze erstarrte, glasartige, also amorphe, wasserlösliche Natrium-, Kalium- und Lithiumsilicate oder ihre wässrigen Lösungen bezeichnet. Durch Neutralisieren des Salzes, Hydrolyse und Kondensation entstehen aus den kettenartigen Si-O-Si-Verbindungen partikuläre [SiO_{4/2}]-Verbindungen.

Solch partikuläre Systeme besitzen ohne Verdichtung in der losen Schüttung bereits gute thermische Isoliereigenschaften. Im Bausektor führt die feinteilige Struktur der gefällten oder pyrogen hergestellten Kieselsäuren zu Schwierigkeiten bei der Verarbeitung wie etwa starke Staubbildung.

Durch das Mischen von Kieselsäuren mit Fasern und anschließendem Pressen können Formkörper wie Platten hergestellt werden, die im Vergleich zu Kieselsäurepulvern deutlich besser handhabbar sind.

Für den Einsatz als Wärmedämmstoff, insbesondere in der Bauisolierung, sind solch hydrophile Materialien allerdings kaum anwendbar, da hydrophile Kieselsäuren eine unerwünscht hohe Feuchtigkeitsaufnahme zeigen, wodurch unter anderem die Wärmedämmeigenschaften nachlassen.

Vollständige hydrophobe Formkörper würde man durch die Kompaktierung hydrophober Kieselsäuren erhalten. Dem Fachmann ist allerdings bekannt, dass sich hydrophobe Kieselsäuren nicht ausreichend verdichten lassen und nicht verpressbar sind. Ebenfalls ist eine Verpressung einer mit hydrophober Kieselsäure versehenen Mischung nicht möglich.

In EP 2 736 979 B1 wird daher vorgeschlagen die Hydrophobierung nach dem Pressvorgang durchzuführen. Dabei wird der hydrophile Formkörper nach dem Pressvorgang in einer Kammer mit wenigstens einem dampfförmigen Organosilan mittels Kombination aus Unterdruck und Überdruck umgesetzt. Nachteilig ist hierbei, dass das Equipment für das Druckwechselsverfahren aufwändig ist und das Verfahren daher schwer großtechnisch umsetzbar ist.

EP 2 982 660 A1 beschreibt ein Verfahren zur Herstellung von hydrophoben Dämmplatten, indem eine hydrophile Mischung zunächst vorverdichtet wird, die so hergestellte Platte mit einem dampfförmigen Hydrophobierungsmittel umgesetzt wird und anschließen auf die endgültige Dichte gepresst wird. Der Einsatz dampfförmiger Hydrophobierungsmittel und die Anwendung von Unterdruck bzw. erhöhten Temperaturen zur Verdampfung des Silylierungsmittels machen dieses Verfahren aufwändig.

EP 0 032 176 B1 beschreibt ein Verfahren zur Herstellung einer hydrophoben Wärmedämmung, indem Kieselsäure, Fasern und Organosiliciumverbindungen gemischt werden. Die Mischung wird vor dem Pressen gelagert, um eine Reaktion der Organosiliciumverbindung mit der Kieselsäure zu ermöglichen. Es wurde also nicht erkannt, dass der Einsatz einer frisch belegten Kieselsäure im Vergleich zu einer gelagerten und getemperten Kieselsäure vorteilhaft ist.

Eine durchgängig hydrophobe Wärmedämmung erhält man beispielsweise, indem das Hydrophobierungsmittel vor dem Verpressen auf die Kieselsäure aufgebracht wird. So beschreibt DE 10 2009 054 566 A1 die Herstellung einer durchgängig hydrophoben Wärmedämmung, indem Mischungen aus Kieselsäure, Fasern und schwerflüchtigen Organosilanen bzw. Organosiloxanen verpresst werden. Flüchtige Anteile werden anschließend durch Ausheizen entfernt ([0025] + Beispiele). Der Temperungsschritt verursacht allerdings zusätzliche Kosten.

DE 10 2007 020 716 A1 beschreibt hydrophobe Hohlbausteinfüllungen, hergestellt aus Kieselsäuren, die mit flüchtigen Organosilanen belegt sind und anschließend unmittelbar verpresst werden. Problematisch ist hierbei die Freisetzung von Abspaltprodukten, insbesondere flüchtiger organischer Abbauprodukte. Diese werden durch Erhitzen entfernt ([0040] + Beispiele).

Der Erfindung liegt die Aufgabe zugrunde ein wirtschaftliches, kontinuierlich durchführbares Verfahren zur Herstellung hydrophober silikatischer Formkörper bereitzustellen.

Gegenstand der Erfindung ist ein Verfahren zur Herstellung hydrophober Silica Formkörper, bei dem
i) eine Mischung enthaltend hydrophile Kieselsäure bei einer Temperatur von höchstens 55°C mit Hydrophobierungsmittel belegt wird und,
ii) die Mischung aus Schritt i nach einer Lagerungsdauer von höchstens 30 Tagen zu Formkörpern verdichtet wird,
iii) wobei während der Schritte i und ii und bis zur Anwendung der Formkörper die Temperatur höchstens 55°C beträgt.

Das Verfahren liefert auf einfache Weise mechanisch stabile, hydrophobe, silikatische Formkörper, insbesondere Platten oder Matten. Das Hydrophobierungsmittel reagiert erst während oder nach dem Verdichtungsschritt ii vollständig ab.

Überraschenderweise wurde gefunden, dass sich frisch mit einem geeigneten Hydrophobierungsmittel belegte Kieselsäure hinsichtlich ihrer Eignung zur Granulierung wie hydrophile Kieselsäure verhält. Dieser spezielle Effekt geht verloren, wenn die belegte Kieselsäure temperiert wird.

In EP 2 781 558 A1 wird beschrieben, dass eine bei niedrigen Temperaturen mit einem kurzkettigen OH-terminierten Polydimethylsiloxan belegte Kieselsäure im Vergleich zu einer getemperten Kieselsäure eine deutlich geringere Hydrophobie aufweist (bestimmt über Methanolbenetzbarkeit). Es ist zudem beschrieben, dass die Hydrophobie während der Lagerung langsam zunimmt. Als Vorteil dieser Kieselsäure, im Vergleich zum Stand der Technik, sind kürzere Einarbeitungszeiten in Kautschuke genannt. Eine positive Auswirkung auf die Verdichtungseigenschaften, beispielsweise zur Herstellung von Wärmestoffen, ist nicht offenbart.

Mit dem in der vorliegenden Erfindung offenbarten Verfahren, ist es überraschenderweise gelungen das Hydrophobierungsmittel vor dem Verdichtungsschritt einzumischen. Das Hydrophobierungsmittel ist daher auch im Kern der Dämmplatten enthalten. Die Verarbeitungseigenschaften während des Pressvorgangs werden dabei nicht negativ beeinflusst. Dadurch kann Standardequipment zur Herstellung von Platten oder Matten eingesetzt und auf aufwendige Prozessschritte, wie die nachträgliche Hydrophobierung und Temperung, verzichtet werden.

Da vorzugsweise Hydrophobierungsmittel eingesetzt werde, welche bei der Reaktion mit den Si-OH Gruppen keine flüchtigen, organischen Verbindungen (VOCs) abspalten, muss nach der Belegung und dem Granulieren auch keine Temperung (auch Abreinigung genannt) zur Entfernung der flüchtigen Bestandteile (z.B. Abspaltprodukte) durchgeführt werden.

Damit die belegte Kieselsäure effizient verdichtet werden kann und stabile Platten entstehen, wird darauf geachtet, dass die Temperatur im Schritt i der Belegung höchstens 55 °C, bevorzugt höchstens 40 °C, besonders bevorzugt höchstens 25 °C beträgt.

Vorzugsweise beträgt die Temperatur bei allen Verfahrensschritten, auch in der Zeit nach der Verdichtung in Schritt ii bis zum Einsatz in der Anwendung (z.B. Applikation oder Weiterverabeitung zu Dämmsystemen) höchsten 55 °C, bevorzugt höchstens 40 °C, besonders bevorzugt höchstens 25 °C. Für die Ausbildung der Hydrophobie der Formkörper sind 55 °C ausreichend.

Neben der besseren Verdichtbarkeit und den verbesserten Produkteigenschaften ermöglicht diese Temperaturführung die Rückführung von im Verfahren anfallenden Rückständen in die Schritte i und ii. Zudem können gegenüber den Verfahren mit Temperungs- bzw. Abreinigungsschritten zusätzliche Verfahrensschritte und Energiekosten eingespart werden.

Das Verfahren kann insbesondere aufgrund der niedrigen Temperaturen und dem Verzicht auf Druckwechsel in allen Schritten kontinuierlich durchgeführt werden.

### Kieselsäure

In den erfindungsgemäßen Verfahren können alle dem Fachmann bekannten hydrophilen Kieselsäuren eingesetzt werden. Bevorzugt werden pyrogene Kieselsäuren oder Fällungskieselsäuren oder Gemische davon eingesetzt. Dabei werden weiterhin bevorzugt Kieselsäuren mit einer BET Oberfläche gemäß DIN 66131 (mit Stickstoff bestimmt) zwischen 50 und 800 m²/g, besonders bevorzugt zwischen 100 und 500 m²/g und insbesondere bevorzugt Kieselsäuren mit einer Oberfläche zwischen 150 und 400 m²/g eingesetzt. Hydrophil bedeutet im Rahmen dieser Erfindung, dass die Si-OH Gruppen an der Oberfläche zugänglich sind und die Kieselsäuren durch Wasser benetzbar sind. Besonders bevorzugt werden pyrogene Kieselsäuren mit BET-Oberflächen zwischen 150 und 400 m²/g eingesetzt.

### Additive

Als weitere Komponenten können insbesondere im Schritt i Additive zugesetzt werden, die Wärmestrahlen im Infrarotbereich absorbieren, streuen oder reflektieren können. Sie werden im Allgemeinen als IR-Trüber bezeichnet. Vorzugsweise weisen diese Trüber im IR-Spektralbereich ein Maximum zwischen vorzugsweise 1,5 und 10 m auf. Die Partikelgröße der Teilchen liegt vorzugsweise zwischen 0,5 - 15 µm. Beispiele für derartige Substanzen sind vorzugsweise Titanoxide, Zirkonoxide, Ilmenite, Eisentitanate, Eisenoxide, Zirkonsilikate, Siliciumcarbid, Manganoxide und Ruß.

Weiterhin können zu einer Reduzierung der elektrostatischen Aufladung, falls benötigt, alle dem Fachmann bekannten Additive zur Reduzierung der elektrostatischen Aufladung wie etwa leitende Alkylammoniumsalze zugesetzt werden.

Aus technischen und / oder wirtschaftlichen Gründen können weitere Füllstoffe zugesetzt werden. Zum Einsatz kommen hier vorzugsweise synthetisch hergestellte Modifikationen von Siliciumdioxid, wie z. B. Aerogele, gefällte Kieselsäuren, Lichtbogenkieselsäuren, SiO₂-haltige Flugstäube, die durch Oxidation von flüchtigem Siliciummonooxid bei der elektrochemischen Herstellung von Silicium oder Ferrosilicium entstehen. Ebenso Kieselsäuren, die durch Auslaugen von Silikaten wie Calciumsilikat, Magnesiumsilikat und Mischsilikaten wie beispielsweise Olivin mit Säuren hergestellt werden. Ferner kommen zum Einsatz natürliche vorkommende SiO₂-haltige Verbindungen wie Diatomeenerden und Kieselguren.

Vorzugsweise enthält die Mischung enthaltend hydrophile Kieselsäure, welche in Schritt i mit Hydrophobierungsmittel belegt wird, mindestens 80 Gew.-%, besonders bevorzugt mindestens 90 Gew.-%, insbesondere mindestens 95 Gew.-% hydrophile Kieselsäure.

In einer bevorzugten Ausführungsform findet eine mechanische Verstärkung oder Armierung durch den Einsatz faseriger Materialen. Diese erhöhen die mechanische Stabilität des Gesamtsystems (Beispiel 1 verglichen mit Beispiel 4). Zur Armierung, also zur mechanischen Verstärkung oder Bewehrung, werden Fasern eingesetzt. Diese Fasern können anorganischen oder organischen Ursprungs sein. Beispiele für anorganische Fasern sind Glaswolle, Steinwolle, Basalt-Fasern, Schlacken-Wollen und keramische Fasern, die aus Schmelzen von Aluminium und/oder Siliciumdioxid, sowie weiteren anorganischen Metalloxiden bestehen. Reine Siliciumdioxidfasern sind zum Beispiel Silica-Fasern. Organische Fasern sind beispielsweise Cellulosefasern, Textilfasern oder Kunststofffasern. Bevorzugt werden organische Fasern auf Basis Cellulose (Zellwolle) eingesetzt. Aus toxikologischen Gründen und Aspekten der Nachhaltigkeit (Entsorgung) werden im Rahmen dieser Erfindung vorzugsweise keine kristallinen, anorganischen Fasern, wie beispielsweise Asbestfasern, eingesetzt. Bevorzugt kommen Fasern mit einer Länge von 1 bis 25 mm, besonders bevorzugt von 3 bis 10 mm zum Einsatz. Der Durchmesser der Fasern beträgt vorzugsweise 1 bis 12 µm und besonders bevorzugt 6 bis 9 µm.

In einer bevorzugten Ausführungsform beträgt der Anteil der Fasern, bezogen auf die Gesamtmischung vorzugsweise 0,5 bis 20 Gew,-%, bevorzugt 3 bis 10 Gew.-%.

### Hydrophobierungsmittel

Als Hydrophobierungsmittel sind alle dem Fachmann bekannten Stoffe zur Hydrophobierung von Kieselsäuren einsetzbar, insbesondere Organosiliciumverbindungen (z.B. Organosilane, Organosiloxane oder Siliconharze) und Kohlenwasserstoffe (z.B. Paraffine, Wachse, Carbonsäuren, insbesondere Fettsäuren).

Als Hydrophobierungsmittel werden vorzugsweise bei 25°C flüssige, reaktive Organosilane, Organosiloxane oder Siliconharze eingesetzt, welche hydrophobierende Eigenschaften besitzen und zur Reaktion mit den Si-OH Gruppen der Kieselsäureoberfläche befähigt sind.

Die Organosilane, Organosiloxane oder Siliconharze können rein oder in beliebigen Gemischen eingesetzt werden.

Bevorzugt ist die Reaktivität der eingesetzten Organosilane, Organosiloxane oder Siliconharze so gewählt, dass die hydrophobierende Wirkung vor dem Verdichtungsschritt ii noch nicht komplett entfaltet ist.

Bevorzugt werden Organosilane, Organosiloxane oder Siliconharze eingesetzt, die während der Reaktion mit den Si-OH Gruppen der Kieselsäure bezogen auf die Masse der Mischung höchsten 1 % (höchstens 0,1 %, höchstens 0,01%) an flüchtigen organischen und/oder ätzenden Verbindungen abspalten, wobei unter diesen Verbindungen bevorzugt CH₃OH, CH₃CH₂OH, CH₃COOH, HCl, NH₃ verstanden werden.

Es werden als Hydrophobierungsmittel vorzugsweise Organosilane der allgemeinen Formel

R¹ₙR²ₘSiX₄₋₍ₙ₊ₘ₎ (I)

eingesetzt,
wobei n und m 0, 1, 2, oder 3 sein können und die Summe n + m kleiner oder gleich 3 ist und
R¹ ein gesättigter oder einfach oder mehrfach ungesättigter, einwertiger, gegebenenfalls mit -CN, -NCO, -NR³, -COOH, -COOR³, -Halogen, -Acryl, -Epoxy, -SH, -OH oder -CONR³₂ substituierten Si-C gebundenen C₁-C₂₀-Kohlenwasserstoffrest, bevorzugt ein C₁-C₁₈-Kohlenwasserstoff-Rest, oder ein Arylrest, oder C₁-C₁₅-Kohlenwasserstoffoxyrest, bevorzugt ein C₁-C₈-Kohlenwasserstoffoxy-Rest, besonders bevorzugt ein C₁-C₄-Kohlenwasserstoffoxy-Rest, in denen jeweils eine oder mehrere, einander nicht benachbarte Methyleneinheiten durch Gruppen -O-, -CO-, -COO-, -OCO-, oder -OCOO-, -S-, oder -NR³- ersetzt sein können und in denen eine oder mehrere, einander nicht benachbarte Methineinheiten durch Gruppen, -N=, -N=N-, oder -P= ersetzt sein können, ist, wobei
R² Wasserstoff oder ein gesättigter oder einfach oder mehrfach ungesättigter, einwertiger, gegebenenfalls mit -CN, -NCO, -NR³₂, -COOH, -COOR³, -Halogen, -Acryl, -Epoxy, -SH, -OH oder -CONR³2 substituierten Si-C gebundenen C₁-C₂₀-Kohlenwasserstoffrest, bevorzugt ein C₁-C₁₈-Kohlenwasserstoff-Rest, oder ein Arylrest, oder C₁-C₁₅-Kohlenwasserstoffoxyrest, bevorzugt ein C₁-C₈-Kohlenwasserstoffoxy-Rest, besonders bevorzugt ein C₁-C₄-Kohlenwasserstoffoxy-Rest, in denen jeweils eine oder mehrere, einander nicht benachbarte Methyleneinheiten durch Gruppen -O-, -CO-, -COO-, -OCO-, oder -OCOO-, -S-, oder -NR³- ersetzt sein können und in denen eine oder mehrere, einander nicht benachbarte Methineinheiten durch Gruppen, -N=, -N=N-, oder -P= ersetzt sein können, ist, wobei
R³ die gleiche Bedeutung wie R² hat, und R² und R³, gleich oder verschieden sein können,
X ein C-O gebundener C₁-C₁₅-Kohlenwasserstoff-Rest, bevorzugt ein C₁-C₈-Kohlenwasserstoff-Rest, besonders bevorzugt ein C₁-C₃-Kohlenwasserstoff-Rest, oder ein Acetylrest, oder ein Halogenrest, bevorzugt Chlor, oder Wasserstoff, oder ein OH-Rest bedeutet,
   oder

R¹¹ᵢR²²ⱼSi-Y-SiR¹¹ᵢR²²ⱼ (II)

wobei
R¹¹ die Bedeutung von R¹ und R²² die Bedeutung von R² haben,
i und j 0, 1, 2 oder 3 sein können und die Summe aus i + j gleich 3 ist und
Y die Gruppe NH oder -O- sein kann.

Es werden vorzugsweise kettenförmige oder cyclische, verzweigte oder unverzweigte Organosiloxane bestehend aus Bausteinen der allgemeinen Formeln

(R⁴ₐZ_{b}SiO_{1/2}) (III-a)

(R⁴₂SiO_{2/2}) (III-b)

(R⁴SiO_{3/2}) (III-c)

(R⁴R⁵SiO_{2/2}) (III-d)

(SiO_{4/2}) (III-e)

eingesetzt,
wobei die Bausteine in beliebigen Mischungen enthalten sein können, wobei
R⁴ die Bedeutung von R¹ und R⁵ die Bedeutung von R² haben, und Z die Bedeutung von X haben und jeweils gleich oder verschieden sein können, und a und b 0, 1, 2, oder 3 sein können, mit der Massgabe, dass die Summe a + b gleich 3 ist.

Bevorzugt werden cyclische Organosiloxane eingesetzt.

Bevorzugt werden auch kettenförmige organofunktionelle Organopolysiloxane eingesetzt, bestehend aus vorzugsweise 2 Bausteinen der allgemeinen Formel III-a und vorzugsweise 1 bis 100000 Bausteinen der allgemeinen Formel III-b und vorzugsweise 1 bis 500 Bausteinen der allgemeinen Formel III-d, bevorzugt 1 bis 50000 Bausteinen der allgemeinen Formel III-b und vorzugsweise 1 bis 250 Bausteinen der allgemeinen Formel III-d, besonders bevorzugt 1 bis 10000 Bausteinen der allgemeinen Formel III-b und vorzugsweise 1 bis 200 Bausteinen der allgemeinen Formel III-d, und ganz besonders bevorzugt 1 bis 5000 Bausteinen der allgemeinen Formel III-b und 1 bis 100 Bausteinen der allgemeinen Formel III-d, wobei R⁴ bevorzugt Methyl und R⁵ bevorzugt -CH₂-CH₂-CH₂-NH₂ oder -CH₂-CH₂-CH₂-NH-CH₂-CH₂-NH₂ ist.

Bevorzugt werden kettenförmige Organopolysiloxane eingesetzt, bestehend vorzugsweise aus 2 Bausteinen der allgemeinen Formel III-a und vorzugsweise 1 bis 100000 Bausteinen der allgemeinen Formel III-b, bevorzugt 1 bis 50000 Bausteinen der allgemeinen Formel III-b, besonders bevorzugt 1 bis 10000 Bausteinen der allgemeinen Formel III-b, und besonders bevorzugt 1 bis 5000 Bausteinen der allgemeinen Formel III-b, R⁴ bevorzugt Methyl. Besonders bevorzugt werden kettenförmige Organosiloxane eingesetzt, deren R⁴ bevorzugt Methyl und deren Z bevorzugt -OH ist.

Die kinematische Viskosität der Organosiloxane gemessen bei 25 °C beträgt vorzugsweise 1 mm²/s bis 100000 mm²/s, bevorzugt 2 mm²/s bis 10000 mm²/s und besonders bevorzugt 5 mm²/s bis 1000 mm²/s.

Im speziellen bevorzugt werden OH-terminierte Polydimethylsiloxane eingesetzt die bevorzugte eine kinematische Viskosität gemessen bei 25 °C 5 mm²/s bis 100 mm²/s aufweisen.

Vorzugsweise werden auch vernetzte oder teilvernetzte Organopolysiloxane, so genannte Siliconharze, eingesetzt, wobei es sich bevorzugt um solche handelt, die Bausteine der allgemeinen Formel III-a und Bausteine der allgemeinen Formel III-e enthalten, besonders bevorzugt mit R⁴ gleich Methyl, a gleich 3 und b gleich 0, oder solche, die vorzugsweise Bausteine der allgemeinen Formel III-c und Bausteine der allgemeinen Formel III-b enthalten, besonders bevorzugt mit R⁴ gleich Methyl.

### Menge Hydrophobierungsmittel

Die Zusatzmengen an Hydrophobierungsmittel in Schritt i hängt von der spezifischen Oberfläche (BET-Oberfläche) der Kieselsäuren, deren Anteil an der Mischung, der Art der Silane bzw. Siloxane sowie der für die Endanwendung notwendigen Hydrophobie ab. Die Zugabemenge liegt vorzugsweise zwischen 0,5 und 20 Gew.- %, bevorzugt zwischen 1 und 15 Gew.- %, besonders bevorzugt zwischen 5 und 10 Gew.-%, jeweils bezogen auf die gesamte Mischung.

### Herstellung der Mischung

In einer bevorzugten Ausführungsform werden die Komponenten gemischt. Die Zugabe des Hydrophobierungsmittels erfolgt während der Mischungsherstellung vorzugsweise in flüssiger Form, dabei ist es notwendig, dass eine innige Durchmischung der einzelnen Komponenten stattfindet. Die Adsorption des Hydrophobierungsmittels erfolgt bevorzugt durch Besprühen der Kieselsäure mit dem flüssigen Hydrophobierungsmittel im Fließbett oder in der Wirbelschicht.

Die Temperatur ist im Allgemeinen so gewählt, dass das eingesetzte Hydrophobierungsmittel während des Mischvorgangs in Schritt i und vor der Verdichtung noch nicht vollständig mit den Silanolgruppen der Silica Oberfläche reagiert. Durch diese Temperatureinstellung wird erreicht, dass sich die belegte Kieselsäure hinsichtlich der Verarbeitbarkeit im Sinne einer Verdichtung zu Formkörpern, insbesondere dem Pressen von Platten und Matten, weitgehend wie eine hydrophile Kieselsäure verhält. Für die Herstellung von Dämmplatten mit einer optimalen Kombination aus Hydrophobie und mechanischer Stabilität ist dies entscheidend. Wird diese Temperatur auch nur für einige Stunden überschritten, so verhält sich die Kieselsäuremischung hinsichtlich der Komprimierbarkeit und resultierender Produktstabilität bereits wie eine hydrophobe HDK mit vergleichbarem C-Gehalt (siehe auch Beispiel 1 verglichen mit Vergleichsbeispiel 2).

Die Zugabegeschwindigkeit und die Nachrührdauer des Hydrophobierungsmittels sind im Allgemeinen so gewählt, dass eine innige Durchmischung sichergestellt ist.

Der Mischung können vor dem Schritt ii Fasern zugegeben werden. Beim Einsatz von Fasern können diese in Schritt i vor, während oder nach der Belegung mit dem Hydrophobierungsmittel der Mischung zugesetzt werden. Da eine zu lange mechanischen Beanspruchung, z.B durch intensives Rühren, zu einem Bruch der Fasern führen kann und damit die stabilisierende Wirkung abnehmen kann, werden die Fasern in einer bevorzugten Ausführungsform nach dem Einmischen des Hydrophobierungsmittels zugegeben.

Nach Schritt i und vor dem Pressen in Schritt ii wird die Mischung nur kurz gelagert. Die Lagerungsdauer der Mischung ist im Allgemeinen so gewählt, dass das eingesetzte Hydrophobierungsmittel während des Mischvorgangs, vor der Entlüftung und vor der Verdichtung noch nicht vollständig mit den Silanolgruppen der Silica Oberfläche reagiert (siehe auch Beispiel 1 verglichen mit Vergleichsbeispiel 3).

**Pressen** Im Anschluss an den Mischvorgang erfolgt eine Verdichtung im Sinne eines Pressvorganges der erhaltenen Pulvermischung. Die Pulvermischung hat nach Beendigung des Mischvorgangs bevorzugt eine Schüttdichte zwischen 40 und 180 g/L, bevorzugt zwischen 40 und 90 g/L. Die hergestellten Pulvermischungen weisen eine gute Rieselfähigkeit auf und können gut in Formen oder auf Bänder aufgebracht und anschließend verdichtet werden.

Da Kieselsäuren, insbesondere pyrogene Kieselsäuren bzw. Kieselsäure enthaltende Mischungen üblicherweise sehr niedrige Schüttdichten aufweisen, ist es bevorzugt, die Mischung aus Schritt i zu entlüften, d.h., die Luft vor dem Pressen zu entfernen, bevor auf eine Zieldichte verdichtet wird. Eine Entlüftung der Mischung aus Schritt i bewirkt, dass sich die erhaltenen Platten oder Matten nach dem Pressvorgang, nicht wieder aufblähen oder Risse bekommen.

Eine ausreichende Entlüftung kann beispielsweise durch sehr langsames Verdichten erreicht werden. Für eine großtechnische, insbesondere kontinuierliche Produktion sind solch langsame Verdichtungsschritte nicht wirtschaftlich anwendbar. Es ist daher vorteilhaft die Kieselsäure enthaltende Mischung aktiv zu entlüften. Dies kann beispielsweise durch den Einsatz von vermindertem Druck gelingen (siehe Beispiel 5). Dabei kann während der Entlüftung bereits eine Volumenabnahme der Mischung stattfinden. Die Entlüftung und anschließende Verdichtung zu Platten oder Matten kann entweder in unterschiedlichen Geräten oder auch in einem Gerät, das beide Funktionen erfüllt, durchgeführt werden.

Eine kontinuierliche Herstellung von Platten oder Matten kann beispielsweise durch das Verpressen der Mischung zwischen Bändern erfolgen, wobei die Bänder für eine ausreichende Entlüftung des Materials vorzugsweise gasdurchlässig sind.

Vorzugsweise beträgt die Lagerungsdauer bis zur Verdichtung höchstens 15 Tage, besonders bevorzugt höchstens 1 Woche, insbesondere höchstens 3 Tage, ganz besonders bevorzugt höchstens 24 Stunden, im speziellen bevorzugt wird das Material sofort auf eine Zieldichte komprimiert.

Durch die Verdichtung wird die gewünschte Form und Dichte des späteren isolierenden Formkörpers vorgegeben.

Vorzugsweise werden definierte Formen wie Platten, Matten, Zylinder, Hohlzylinder oder komplexe Formteile hergestellt. Unter komplexen Formteilen werden beispielsweise Bauteile für Elektrogeräte, Automobilanwendungen, Kühlgeräte usw. verstanden.

Nicht erfindungsgemäß sind Formen wie Pulver, Granulate, Bruchstücke, Splitter und sonstige unregelmäßig geformten Partikel.

Bevorzugt erfolgt die Verdichtung mittels hydraulischer Pressen, Bandpressen, Walzen oder weiteren, dem Fachmann bekannten Methoden zur Herstellung von Formkörpern aus Pulvermischungen. Durch Einstellen der Dichte kann die Porosität und damit auch thermische Isolierwirkung der erhaltenen Formkörper beeinflusst werden. Vorzugsweise liegt die thermische Leitfähigkeit der Formkörper im Bereich von 18 bis 35 mW/(m*K), bevorzugt zwischen 20 und 28 mW/(m*K) und insbesondere zwischen 20 und 25 mW/(m*K).

Durch die eingestellt Dichte kann auch die mechanische Stabilität der Formkörper beeinflusst werden. Eine höhere Dichte führt allgemein zu stabileren Formkörpern.

Bevorzugt beträgt die Dichte der Formkörper nach dem Pressvorgang zwischen 100 und 400 g/L, besonders bevorzugt zwischen 150 und 300 g/L und insbesondere bevorzugt zwischen 180 und 260 g/L.

Im Gegensatz zu anderen Verfahren, bei denen während oder nach der Kompaktierung eine Temperung erfolgt, können im Verfahren und bei der Anwendung der Formkörper anfallende Rückstände, beispielsweise Feinanteile vom Zuschnitt und sonstige Abschnitte z.B. durch die Bearbeitung derFormkörper (z.B. Bohren, Fräsen usw.), wieder in die vorangehenden Verfahrensschritte zurückgeführt werden. Vorzugsweise werden die Rückstände vor der Rückführung oder direkt bei der Herstellung der Mischung (Schritt i) wieder zerkleinert (Beispiel 7). Vorzugsweise findet die Rückführung der anfallenden Rückstände innerhalb der, für die Mischung definierten, Lagerungsdauer statt. Für eine großtechnische Umsetzung ist diese geschlossene Fahrweise besonders vorteilhaft, da somit keine unerwünschten Nebenprodukte (z.B. Abschnitte, Ausschussware, Abfälle durch Fräsen oder Bohren usw.) anfallen.

Neben dem Einsatz von Fasern in der Mischung, kann für eine mechanische Verstärkung oder auch zur Reduzierung der Staubbildung auch eine Armierung, Kaschierung, Umhüllung oder sonstige Behandlung der Oberfläche der Platten oder Matten erfolgen. Das Anbringen dieser Armierung bzw. Kaschierung kann während oder nach dem Pressvorgang erfolgen. Eingesetzt werden können alle dem Fachmann hierfür bekannten Materialen (z.B. Fließe, Gewebe, Folien). Bei Bedarf können für eine verbesserte Haftung auch geeignete Binder bzw. Kleber eingesetzt werden.

Nach dem Pressen auf die Zieldichte kann das Hydrophobierungsmittel mit den Silanolgruppen der Kieselsäure reagieren, wodurch die Hydrophobie der Dämmplatte bzw. -matte vorzugsweise zunimmt.

Für das Ausbilden ausreichender Hydrophobie ist hierfür kein zusätzlicher Verfahrensschritt, insbesondere keine Temperung notwendig. Hierdurch wird das Verfahren vereinfacht und die Energiekosten minimiert (Beispiel 1 verglichen mit Vergleichsbeispiel 1).

Die Lagerungsdauer der Platten und Matten beträgt bei Raumtemperatur vorzugsweise mindestens 3 Tage, bevorzugt mindestens eine Woche, besonders bevorzugt mindestens zwei Wochen. Vorzugsweise ist die Hydrophobie bis zur Anwendung der Platte oder Matte entfaltet. Die Hydrophobierung im Anschluss an das Pressen kann auch durch Zugabe von katalytisch aktiven Substanzen beschleunigt werden. Hierzu können alle dem Fachmann bekannten Verbindungen zur Aktivierung funktioneller Organosiliciumverbindungen, wie beispielsweise Bröndsted- oder Lewis-Säuren, eingesetzt werden. Beispiele für Bröndsted-Säuren sind Salzsäure, Schwefelsäure oder Salpetersäure, bevorzugt wird als Bröndsted-Säure Salzsäure eingesetzt. Einsetzbare Lewis-Säuren sind beispielsweise Zinn- oder Titanverbindungen wie Zinnalkoxide oder Titanalkoxide.

### Verwendung

Die erfindungsgemäßen Formkörper finden als thermische und / oder akustische Isolierstoffe Verwendung, bevorzugt werden sie zur thermischen Isolierung eingesetzt. So können die erfindungsgemäßen Formkörper beispielsweise als Füllung für Hohlbausteine eingesetzt werden. Ebenso können diese nach einer Einhüllung und anschließendem entfernen von Gasen als Vakuumisolationspaneele eingesetzt werden. Insbesondere können die erfindungsgemäßen Formkörper zur Herstellung von Dämmelementen zur direkten Schall- und Wärmedämmung an Gebäudewänden und Decken eingesetzt werden. Möglich ist auch der Einsatz auch außerhalb der Bauanwendungen, beispielsweise in Elektrogeräten, Kühlgeräten, im Automobil- oder Luftfahrtbereich. Durch die gute mechanische Stabilität wird die Handhabung der Formkörper vereinfacht. Bevorzugt werden die erfindungsgemäß hergestellten Formkörper als Wärmeisolationssystem eingesetzt, beispielsweise durch Anbringen an eine Wand z.B. durch Verklebung, durch die mechanische Befestigung mittels Dübeln, Schrauben oder weiteren dem Fachmann bekannten Möglichkeiten zur Anbringung von Wärmedämmsystemen. Die hydrophoben, silikatischen, isolierenden Formkörper werden bevorzugt dort eingesetzt, wo gute Isolierwirkung (thermisch und akustisch) in Kombination mit Hydrophobie und geringer Brennbarkeit gefordert wird.

### Beispiele

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Dichte

Die Dichte der Platte wurde aus dem Gewicht der Platte und dem Volumen Platten berechnet. Das Volumen der Platte wurde aus den Außenmaßen der Platte berechnet. Die Angabe der Dichte erfolgt, falls nicht anders angegeben, in Gramm pro Liter (g/L).

### Bestimmung der thermischen Leitfähigkeit

Bei der Herstellung von plattenförmigen Körpern durch einen Pressvorgang wurde die thermische Leitfähigkeit in Anlehnung an DIN EN 12667:2001 an einem Gerät der Bezeichnung A206 der Firma Hesto an Platten der Dimensionen 11 x 11 x 2 cm bei einer Temperatur von 23 °C bestimmt.

### Qualitativer Test auf Hydrophobie

Die Beurteilung der Hydrophobie wurde zwei Wochen nach dem Pressen durchgeführt. Hierfür wurden mit einem scharfen Messer Stücke von ca. 5 mm Größe herausgeschnitten. 1 g dieser Stücke wurde zu 100 ml Wasser gegeben und in einem geschlossenen Gefäß für 24 h gelagert. Die Beurteilung erfolgt wie folgt:
+ Hydrophob: Die Plattenstücke sind kaum mit Wasser benetzbar und schwimmen komplett an der Wasseroberfläche.
○ Teilhydrophob: Die Plattenstücke sind benetzbar, schwimmen aber größtenteils an der Wasseroberfläche.
- Nicht hydrophob: Die Plattenstücke sind sofort benetzbar und sinken innerhalb weniger Minuten im Wasser nach unten.

### Bruchkraft

Die Bruchkraft, also die Kraft bis zum Bruch der Dämmplatte wurde in Anlehnung an die DIN 53 423 (3-Punkt-Biegeversuch) durchgeführt. Hierfür wurde ein Gerät BTC-FR010TH.A50 der Firma Zwick/Roell eingesetzt. Die Stützweite bei der Messung beträgt 100 mm die Maße der Platten beträgt 110 x 110 mm. Die Dicke der Platten beträgt 20 mm (exakter Wert siehe Tabelle).

Die Angabe der Bruchkraft erfolgt in Newton (N).

### Bestimmung des Kohlenstoffgehalts

Die Bestimmung des Kohlenstoffgehalts (C-Gehalts) der Proben wurde an einem Leco CS 230 Analysator durchgeführt. Die Analyse erfolgte durch Hochfrequenzverbrennung der Probe im Sauerstoffstrom. Detektiert wurde mittels nicht dispersiver Infrarotdetektoren.

### Bezugsquellen:

**HDK® T30:** hydrophile, pyrogene Kieselsäure der Wacker Chemie AG mit einer BET Oberfläche von 300 m² / g.
**HDK® H30:** hydrophobe, pyrogene Kieselsäure der Wacker Chemie AG mit einer BET Oberfläche von 270-320 m² / g, einer Dichte von ca. 40 g/L und einem C-Gehalt von 1,4 - 2,6 %.
**HDK® H18:** hydrophobe, pyrogene Kieselsäure der Wacker Chemie AG mit einer BET Oberfläche von 170-230 m² / g, einer Dichte von ca. 50 g/L und einem C-Gehalt von 4 - 5,2 %.
**OH-term. PDMS**: OH-terminiertes Polydimethylsiloxan der Wacker Chemie AG mit einer kinematischen Viskosität im Bereich von etwa 35 mm²/s.
**Methyltriethoxysilan:** WACKER® SILAN M1-TRIETHOXY der Wacker Chemie AG.
**Dimethyldiethoxysilan:** WACKER® SILAN M2-DIETHOXY der Wacker Chemie AG.

Alle weiteren Laborchemikalien wurden von Sigma-Aldrich bezogen.

Zur Armierung wurden aufgeschlossene Zellwollfasern der Länge 6 mm und Durchmesser 9 µm eingesetzt.

Alle weiteren Laborchemikalien wurden von gängigen Zulieferern bezogen.

### Herstellung der Kieselsäure enthaltenden Mischung

### Methode A

Die Mischung, bestehend aus Kieselsäure und Additiven, wurde bei 25 °C für 10 Minuten intensiv gerührt, so dass das Material fluidisiert wurde. Über eine Zweistoffdüse wurde das Organosiloxan verdüst und auf die fluidisierte Kieselsäure gesprüht. Nach der Belegung wurden die Fasern zugegeben und für weitere 2 Minuten in einem Dissolvermischer (4000 UpM) intensiv gemischt. Man erhielt eine Mischung, die vor der Verdichtung maximal für 3 Tage bei Raumtemperatur gelagert wurde.

### Methode B

10 % der einzusetzenden Mischung, bestehend aus Kieselsäure und Additiven, wurde bei 25 °C für 10 Minuten intensiv gerührt, so dass das Material fluidisiert wurde. Anschließend wurde das Organosiloxan unter Rühren in die Mischung getropft. Bei der Wahl des Rührers und der Rührdauer wurde darauf geachtet, dass möglichst wenig Organosiloxan an den Gefäßwänden verbleibt. Dies konnte beispielsweise durch Anfärben des Organosiloxans und durch wiegen der resultierenden Mischung überprüft und gegebenenfalls optimiert wurden.

Man erhielt nach der Belegung ein rieselfähiges Pulver (Masterbatch).

In einem größeren Rührwerk wurde bei Raumtemperatur die restliche Menge der Mischung, bestehend aus Kieselsäure und Additiven, intensiv gerührt. In diese Mischung wurde unter Rühren das Masterbach gestreut. Anschließend wurden unter intensivem Rühren (Dissolvermischer, 4000 UpM) die Fasern zugegeben und für 2 Minuten intensiv gemischt. Man erhält eine Mischung, die vor der Verdichtung maximal für 3 Tage bei Raumtemperatur gelagert wurde.

### Mischung A:

800 g HDK T30
150 g OH-terminiertes Polydimethylsiloxan (Viskosität 35 mm²/s)
50 g Zellwolle

### Mischung B:

800 g HDK T30
50 g Siliciumcarbid
100 g OH-terminiertes Polydimethylsiloxan (Viskosität 35 mm²/s)
50 g Zellwolle

### Mischung C:

875 g HDK T30
75 g OH-terminiertes Polydimethylsiloxan (Viskosität 35 mm²/s)
50 g Zellwolle

### Beispiel 1

60 g der Mischung A, hergestellt nach Methode A, wurden in eine Pressform der Größe 11 x 11 cm gegeben, wobei auf eine gleichmäßige Schütthöhe geachtet wurde. Die Mischung wurde anschließend mit einer handhydraulischen Presse auf eine Dicke von 2 cm gebracht. Die Platte zeigte gute mechanische Stabilität und konnte problemlos, zerstörungsfrei aus der Form entnommen werden. Nach dem Entformen wurde die Dicke gemessen (siehe Tabelle 1).

### Beispiel 2

60 g der Mischung A, hergestellt nach Methode B, wurden in eine Pressform der Größe 11 x 11 cm gegeben, wobei auf eine gleichmäßige Schütthöhe geachtet wurde. Die Mischung wurde anschließend mit einer handhydraulischen Presse auf eine Dicke von 2 cm gebracht. Die Platte zeigte gute mechanische Stabilität und konnte problemlos, zerstörungsfrei aus der Form entnommen werden. Nach dem Entformen wurde die Dicke gemessen (siehe Tabelle 1).

### Beispiel 3

60 g der Mischung B, hergestellt nach Methode A, wurden in eine Pressform der Größe 11 x 11 cm gegeben, wobei auf eine gleichmäßige Schütthöhe geachtet wurde. Die Mischung wurde anschließend mit einer handhydraulischen Presse auf eine Dicke von 2 cm gebracht. Die Platte zeigte gute mechanische

Stabilität und konnte problemlos, zerstörungsfrei aus der Form entnommen werden. Nach dem Entformen wurde die Dicke gemessen (siehe Tabelle 1).

### Beispiel 4

85,0 g hydrophile Kieselsäure (HDK T30) wurde bei 25 °C für 10 Minuten intensiv gerührt, so dass das Material fluidisiert wurde. Über eine Zweistoffdüse wurde 15,0 g eines OH-terminiertes Polydimethylsiloxan (Viskosität 35 mm²/s) verdüst und auf die Mischung gesprüht. Die Platte ist spröde, im Vergleich zu den Platten mit Fasern (Bsp. 1) mechanisch weniger stabil und muss beim Entformen und bei den analytischen Untersuchungen vorsichtig gehandhabt werden. Man erhielt eine Mischung, die vor der Verdichtung maximal für 3 Tage bei Raumtemperatur gelagert wurde.

### Beispiel 5

60 g der Mischung A, hergestellt nach Methode A, wurden in eine Pressform der Größe 11 x 11 cm gegeben, wobei auf eine gleichmäßige Schütthöhe geachtet wurde. Über die Bodenplatte, belegt mit einem Filterfließ wurde ein Unterdruck angelegt, wodurch das zu pressende Material entlüftet und dadurch vorverdichtet wurde. Anschließend wurde das Material mit einem Stempel, mittels einer handhydraulischen Presse, auf eine Dicke von 2 cm gepresst. Die Platte zeigte gute mechanische Stabilität und konnte problemlos, zerstörungsfrei aus der Form entnommen werden. Nach dem Entformen wurde die Dicke gemessen (siehe Tabelle 1).

### Beispiel 6

60 g der Mischung C, hergestellt nach Methode A, wurden in eine Pressform der Größe 11 x 11 cm gegeben, wobei auf eine gleichmäßige Schütthöhe geachtet wurde. Die Mischung wurde anschließend mit einer handhydraulischen Presse auf eine Dicke von 2 cm gebracht. Die Platte zeigte gute mechanische Stabilität und konnte problemlos, zerstörungsfrei aus der Form entnommen werden. Nach dem Entformen wurde die Dicke gemessen (siehe Tabelle 1). Die Platte zeigte, aufgrund des geringeren Anteils an Hydrophobierungsmittel, eine etwas geringere Hydrophobie.

### Beispiel 7

Eine frisch hergestellte Dämmplatte nach Beispiel 1 wurde mit einer Bandsäge in Streifen von ca. 5 mm zerteilt (Abschnitte). 80 g einer frisch hergestellten Mischung A hergestellt nach Methode A wurden mit 20 g der Abschnitte für 3 Minuten in einem Dissolvermischer (4000 UpM) intensiv vermischt. 60 g dieser Mischung wurden in eine Pressform der Größe 11 x 11 cm gegeben, wobei auf eine gleichmäßige Schütthöhe geachtet wurde. Die Mischung wurde anschließend mit einer handhydraulischen Presse auf eine Dicke von 2 cm gebracht. Die Platte zeigte gute mechanische Stabilität und konnte problemlos, zerstörungsfrei aus der Form entnommen werden. Nach dem Entformen wurde die Dicke gemessen (siehe Tabelle 1).

### Beispiel 8

In einem Rundkolben wurden 11 g Dimethyldiethoxysilan, 0,5 g Ti(OiPr)₄ und 10 g HDK T30 zur Bildung eines rieselfähigen Pulvers gemischt. Diese Pulvermischung wurde für 60 Minuten mit weiteren 45 g HDK T30 in einem Dissolvermischer (4000 UpM) weiter gemischt. Anschließend erfolgte die Zugabe von 3,3 g Zellwolle. Der Mischvorgang wurde für 2 Minuten fortgesetzt. Die Pulvermischung wurde anschließend in eine Pressform der Dimensionen 11 x 11 cm überführt und mittels einer hydraulischen Presse auf eine Dicke von 2 cm verdichtet. Die Platte zeigte gute mechanische Stabilität und konnte problemlos, zerstörungsfrei aus der Form entnommen werden. Die Platten wurden vor der weiteren Analyse für 2 Wochen bei 25 °C gelagert.

### Beispiel 9

In einem Rundkolben wurden 6 g Methyltriethoxysilan, 6 g Dimethyldiethoxysilan, 0,5 g Ti(OiPr)₄ und 10 g HDK T30 zur Bildung eines rieselfähigen Pulvers gemischt. Diese Pulvermischung wurde für 60 Minuten mit weiteren 40 g HDK T30 in einem Dissolvermischer (4000 UpM) weiter gemischt. Anschließend erfolgte die Zugabe von 3,3 g Zellwolle. Der Mischvorgang wurde für 2 Minuten fortgesetzt. Die Pulvermischung wurde anschließend in eine Pressform der Dimensionen 11 x 11 cm überführt und mittels einer hydraulischen Presse auf eine Dicke von 2 cm verdichtet. Die Platte zeigte gute mechanische Stabilität und konnte problemlos, zerstörungsfrei aus der Form entnommen werden. Die Platten wurden vor der weiteren Analyse für 2 Wochen bei 25 °C gelagert.

Vergleichsbeispiel 1 (nicht erfindungsgemäß) 60 g der Mischung A, hergestellt nach Methode A, wurden in eine Pressform der Größe 11 x 11 cm gegeben, wobei auf eine gleichmäßige Schütthöhe geachtet wurde. Die Mischung wurde anschließend mit einer handhydraulischen Presse auf eine Dicke von 2 cm gebracht. Die Platte wurde anschließend für 60 min bei 125 °C erhitzt. Die Platte zeigte gute mechanische Stabilität und konnte problemlos, zerstörungsfrei aus der Form entnommen werden. Nach dem Entformen wurde die Dicke gemessen (siehe Tabelle 1). Die Platte zeigte, trotz zusätzlicher Temperaturbehandlung, eine vergleichbare Hydrophobie wie das erfindungsgemäße Beispiel 1, bei dem auf eine nachträgliche Temperaturbehandlung verzichtet wurde.

Vergleichsbeispiel 2(nicht erfindungsgemäß) 100 g der Mischung A, hergestellt nach Methode A, wurden für 6 Stunden bei 60 °C gelagert. Anschließend wurden 60 g dieser Mischung in eine Pressform der Größe 11 x 11 cm gegeben, wobei auf eine gleichmäßige Schütthöhe geachtet wurde. Die Mischung wurde anschließend mit einer handhydraulischen Presse auf eine Dicke von 2 cm gebracht. Die Platten zeigten, im Vergleich zu den erfindungsgemäßen Beispielen mit gleichem Gehalt an Hydrophobierungsmittel, eine deutlich geringere mechanische Stabilität und konnten nur durch vorsichte Handhabung zerstörungsfrei entformt werden. Für die analytischen Untersuchungen wurden nur intakte Platten eingesetzt, um diese zu erhalten wurden bei Bedarf mehrere Platten hergestellt. Nach dem Entformen wurde die Dicke gemessen (siehe Tabelle 1).

Vergleichsbeispiel 3 (nicht erfindungsgemäß) 800 g HDK T30 wurde bei 25 °C für 10 Minuten intensiv gerührt, so dass das Material fluidisiert wurde. Über eine Zweistoffdüse wurden 150 g des OH-terminierten Polydimethylsiloxans (Viskosität 35 mm²/s) verdüst und auf die fluidisierte Kieselsäure gesprüht. Nach der Belegung wurde die Mischung für 3 Monate bei 25 °C gelagert. Anschließend wurde die gelagerte, belegte Kieselsäure in einem Dissolvermischer (4000 Upm) und 50 g Zellwolle für 2 Minuten intensiv gemischt. Anschließend wurden 60 g dieser Mischung in eine Pressform der Größe 11 x 11 cm gegeben, wobei auf eine gleichmäßige Schütthöhe geachtet wurde. Die Mischung wurde anschließend mit einer handhydraulischen Presse auf eine Dicke von 2 cm gebracht. Die Platten zeigten, im Vergleich zu den erfindungsgemäßen Beispielen mit gleichem Gehalt an Hydrophobierungsmittel, eine deutlich geringere mechanische Stabilität und konnten nur durch vorsichte Handhabung zerstörungsfrei entformt werden. Für die analytischen Untersuchungen wurden nur intakte Platten eingesetzt, um diese zu erhalten wurden bei Bedarf mehrere Platten hergestellt. Nach dem Entformen wurde die Dicke gemessen (siehe Tabelle 1).

Vergleichsbeispiel 4 (nicht erfindungsgemäß) 95,0 g hydrophobe Kieselsäure (HDK H18) und 5,0 g Zellwolle wurden bei 25 °C für 2 Minuten intensiv gemischt (Dissolvermischer, 4000 UpM). Anschließend wurden 60 g dieser Mischung in eine Pressform der Größe 11 x 11 cm gegeben, wobei auf eine gleichmäßige Schütthöhe geachtet wurde. Die Mischung wurde anschließend mit einer handhydraulischen Presse auf eine Dicke von 2 cm gebracht. Die Platten zeigten, im Vergleich zu den erfindungsgemäßen Beispielen, eine deutlich geringere mechanische Stabilität und konnten nur durch vorsichte Handhabung zerstörungsfrei entformt werden. Für die analytischen Untersuchungen wurden nur intakte Platten eingesetzt, um diese zu erhalten wurden bei Bedarf mehrere Platten hergestellt. Nach dem Entformen wurde die Dicke gemessen (siehe Tabelle 1).

Vergleichsbeispiel 5 (nicht erfindungsgemäß) 95,0 g hydrophobe Kieselsäure (HDK H30) und 5,0 g Zellwolle wurden bei 25 °C für 2 Minuten intensiv gemischt (Dissolvermischer, 4000 UpM). Anschließend wurden 60 g dieser Mischung in eine Pressform der Größe 11 x 11 cm gegeben, wobei auf eine gleichmäßige Schütthöhe geachtet wurde. Die Mischung wurde anschließend mit einer handhydraulischen Presse auf eine Dicke von 2 cm gebracht. Die Platten zeigten, im Vergleich zu den erfindungsgemäßen Beispielen, eine deutlich geringere mechanische Stabilität und konnten nur durch vorsichte Handhabung zerstörungsfrei entformt werden. Für die analytischen Untersuchungen wurden nur intakte Platten eingesetzt, um diese zu erhalten wurden bei Bedarf mehrere Platten hergestellt. Nach dem Entformen wurde die Dicke gemessen (siehe Tabelle 1).

Vergleichsbeispiel 6 (nicht erfindungsgemäß) 95,0 g hydrophile Kieselsäure(HDK T30) und 5,0 g Zellwolle wurden bei 25 °C für 2 Minuten intensiv gemischt (Dissolvermischer, 4000 UpM). Anschließend wurden 60 g dieser Mischung in eine Pressform der Größe 11 x 11 cm gegeben, wobei auf eine gleichmäßige Schütthöhe geachtet wurde. Die Mischung wurde anschließend mit einer handhydraulischen Presse auf eine Dicke von 2 cm gebracht. Die Platte zeigte gute mechanische Stabilität und konnte problemlos, zerstörungsfrei aus der Form entnommen werden. Nach dem Entformen wurde die Dicke gemessen (siehe Tabelle 1). Die Platte ist nicht hydrophob.

Vergleichsbeispiel 7 (nicht erfindungsgemäß) 60 einer hydrohoben HDK (HDK H18) wurden in eine Pressform der Größe 11 x 11 cm gegeben, wobei auf eine gleichmäßige Schütthöhe geachtet wurde. Die Mischung wurde anschließend mit einer handhydraulischen Presse auf eine Dicke von 2 cm gebracht. Nach dem Entformen wurde die Dicke gemessen (siehe Tabelle). Die Platte konnte, trotz mehrfacher Versuche, aufgrund der geringen mechanischen Stabilität nicht zerstörungsfrei entformt und analysiert werden, so dass, bis auf den Test auf Hydrophobie, keine weitere Analytik durchgeführt wurden konnte. Im Vergleich zu dem erfindungsgemäßen Beispiel ohne Fasern (Beispiel 4) ist die mechanische Stabilität der erhaltenen Stücke als deutlich geringer einzustufen.

**Tabelle 1: Analytische Daten**

| Beispiel. | Plattendicke [mm] | Dichte [g/L] | λ-Wert [mW/K*m] | Bruchkraft [N] | Hydrophobie |
|---|---|---|---|---|---|
| 1 | 20,1 | 247 | 23,0 | 69 | + |
| 2 | 20,4 | 243 | 22,5 | 70 | + |
| 3 | 20,0 | 248 | 22,2 | 68 | + |
| 4 | 20,3 | 244 | 21,5 | 11 | + |
| 5 | 19,9 | 249 | 22,8 | 71 | + |
| 6 | 20,0 | 248 | 21,5 | 79 | ○ |
| 7 | 20,3 | 244 | 22,8 | 62 | + |
| 8 | 20,8 | 258 | 21,1 | 87 | + |
| 9 | 19,8 | 242 | 21,4 | 68 | + |
| Vgl.1* | 20,2 | 245 | 22,9 | 68 | + |
| Vgl.2* | 20,3 | 244 | 21,8 | 48 | + |
| Vgl.3* | 20,5 | 242 | 21,4 | 52 | + |
| Vgl.4* | 20,4 | 243 | 22,4 | 41 | + |
| Vgl.5* | 19,8 | 250 | 20,5 | 55 | + |
| Vgl.6* | 20,3 | 244 | 21,9 | 93 | - |
| Vgl.7* | Platte zerfallen | Platte zerfallen | Platte zerfallen | Platte zerfallen | + |

| | | | | | |
|---|---|---|---|---|---|
| * nicht erfindungsgemäß | | | | | |

## Patentansprüche

1. Verfahren zur Herstellung hydrophober Silica Formkörper, bei dem
i) eine Mischung enthaltend hydrophile Kieselsäure bei einer Temperatur von höchstens 55°C mit Hydrophobierungsmittel belegt wird und,
ii) die Mischung aus Schritt i nach einer Lagerungsdauer von höchstens 30 Tagen zu Formkörpern verdichtet wird,
iii) wobei während der Schritte i und ii und bis zur Anwendung der Formkörper die Temperatur höchstens 55°C beträgt.

2. Verfahren nach Anspruch 1, bei dem die Formkörper ausgewählt werden aus Platten und Matten.

3. Verfahren nach einem oder mehreren der voranstehenden Ansprüche, bei dem die Hydrophobierungsmittel ausgewählt werden aus bei 25°C flüssigen, reaktiven Organosilanen, Organosiloxanen oder Siliconharzen, welche hydrophobierende Eigenschaften besitzen und zur Reaktion mit den Si-OH Gruppen der Kieselsäureoberfläche befähigt sind.

4. Verfahren nach einem oder mehreren der voranstehenden Ansprüche, bei dem als Hydrophobierungsmittel OH-terminierte Polydimethylsiloxane eingesetzt werden, die eine kinematische Viskosität gemessen bei 25 °C von 5 mm²/s bis 100 mm²/s aufweisen.

5. Verfahren nach einem oder mehreren der voranstehenden Ansprüche, bei dem als hydrophile Kieselsäuren pyrogene Kieselsäuren oder Fällungskieselsäuren oder Gemische davon eingesetzt werden mit einer BET Oberfläche gemäß DIN 66131 zwischen 100 und 500 m²/g.

6. Verfahren nach einem oder mehreren der voranstehenden Ansprüche, bei dem in Schritt i die hydrophile Kieselsäure mit zwischen 0,5 und 20 Gew.- %, jeweils bezogen auf die gesamte Mischung, an Hydrophobierungsmittel belegt wird.

7. Verfahren nach einem oder mehreren der voranstehenden Ansprüche, bei dem nach Schritt i und vor dem Verdichten in Schritt ii die Mischung höchstens 15 Tage gelagert wird.

8. Verfahren nach einem oder mehreren der voranstehenden Ansprüche, bei dem die Mischung aus Schritt i entlüftet wird, bevor auf eine Zieldichte verdichtet wird.

9. Verfahren nach einem oder mehreren der voranstehenden Ansprüche, bei dem der Mischung vor dem Schritt ii Fasern zugegeben werden.

10. Verfahren nach einem oder mehreren der voranstehenden Ansprüche, bei dem nach im Verfahren und bei der Anwendung der Formkörper anfallende Rückstände wieder in die vorangehenden Verfahrensschritte zurückgeführt werden.

## Claims

1. Process for producing hydrophobic silica moldings, wherein
i) a mixture containing hydrophilic silica is coated with hydrophobicizing agent at a temperature of not more than 55°C and
ii) the mixture from step i is, after a storage time of not more than 30 days, compacted to give moldings,
iii) where the temperature is not more than 55°C during steps i and ii and up to use of the moldings.

2. Process according to Claim 1, wherein the moldings are selected from among plates and mats.

3. Process according to one or more of the preceding claims, wherein the hydrophobicizing agents are selected from among reactive organosilanes, organosiloxanes or silicone resins which are liquid at 25°C and have hydrophobicizing properties and are capable of reacting with the Si-OH groups of the silica surface.

4. Process according to one or more of the preceding claims, wherein OH-terminated polydimethylsiloxanes which have a kinematic viscosity measured at 25°C of from 5 mm²/s to 100 mm²/s are used as hydrophobicizing agents.

5. Process according to one or more of the preceding claims, wherein pyrogenic silicas or precipitated silicas or mixtures thereof having a BET surface area in accordance with DIN 66131 in the range from 100 to 500 m²/g are used as hydrophilic silicas.

6. Process according to one or more of the preceding claims, wherein, in step i, the hydrophilic silica is coated with from 0.5 to 20% by weight, in each case based on the total mixture, of hydrophobicizing agent.

7. Process according to one or more of the preceding claims, wherein the mixture is stored for not more than 15 days after step i and before compaction in step ii.

8. Process according to one or more of the preceding claims, wherein the mixture from step i is deaerated before compaction to a target density is carried out.

9. Process according to one or more of the preceding claims, wherein fibers are added to the mixture before step ii.

10. Process according to one or more of the preceding claims, wherein residues obtained in the process and during use of the moldings are recirculated again to the preceding process steps.

## Revendications

1. Procédé de fabrication de corps moulés en silice hydrophobe, selon lequel :
i) des agents d'hydrophobation sont ajoutés à un mélange contenant de la silice hydrophile à une température d'au plus 55 °C, et
ii) le mélange de l'étape i est compacté en corps moulés après une durée de stockage d'au plus 30 jours,
iii) la température étant d'au plus 55 °C pendant les étapes i et ii et jusqu'à l'utilisation des corps moulés.

2. Procédé selon la revendication 1, selon lequel les corps moulés sont choisis parmi les plaques et les mats.

3. Procédé selon une ou plusieurs des revendications précédentes, selon lequel les agents d'hydrophobation sont choisis parmi les organosilanes, organosiloxanes ou résines de silicone réactifs, liquides à 25 °C, qui présentent des propriétés d'hydrophobation et sont en mesure de réagir avec les groupes Si-OH de la surface de la silice.

4. Procédé selon une ou plusieurs des revendications précédentes, selon lequel des polydiméthylsiloxanes à terminaison OH qui présentent une viscosité cinématique mesurée à 25 °C de 5 mm²/s à 100 mm²/s sont utilisés en tant qu'agents d'hydrophobation.

5. Procédé selon une ou plusieurs des revendications précédentes, selon lequel des silices pyrogènes ou des silices précipitées ou des mélanges de celles-ci, ayant une surface BET selon DIN 66131 comprise entre 100 et 500 m²/g, sont utilisés en tant que silices hydrophiles.

6. Procédé selon une ou plusieurs des revendications précédentes, selon lequel, à l'étape i, entre 0,5 et 20 % en poids, à chaque fois par rapport à l'ensemble du mélange, d'agents d'hydrophobation sont ajoutés à la silice hydrophile.

7. Procédé selon une ou plusieurs des revendications précédentes, selon lequel le mélange est stocké pendant au plus 15 jours après l'étape i et avant le compactage à l'étape ii.

8. Procédé selon une ou plusieurs des revendications précédentes, selon lequel le mélange de l'étape i est aéré avant d'être compacté à une densité cible.

9. Procédé selon une ou plusieurs des revendications précédentes, selon lequel des fibres sont ajoutées au mélange avant l'étape ii.

10. Procédé selon une ou plusieurs des revendications précédentes, selon lequel des résidus formés ultérieurement dans le procédé et lors de l'utilisation des corps moulés sont recyclés dans les étapes de procédé précédentes.
